Europäisches Patentamt

European Patent Office

Office européen des brevets

(19)

(11) **EP 0 683 940 B1**

(12)

# EUROPEAN PATENT SPECIFICATION

(45) Date of publication and mention
of the grant of the patent:
**02.01.1997 Bulletin 1997/01**

(21) Application number: **94906917.3**

(22) Date of filing: **03.02.1994**

(51) Int Cl.6: **H04B 3/23**

(86) International application number:
**PCT/EP94/00347**

(87) International publication number:
**WO 94/18759 (18.08.1994 Gazette 1994/19)**

(54) **PROCESS AND DEVICE FOR THE DETECTION OF DISABLING TONE OF THE ECHO CANCELLER IN A TELEPHONE SWITCHING EXCHANGE**

VERFAHREN UND EINRICHTUNG ZUM DETEKTIEREN EINES DISABLE-TONS EINES ECHOKOMPENSATORS IN EINER FERNSPRECHVERMITTLUNGSANLAGE

PROCEDE ET DISPOSITIF DE DETECTION D'UNE TONALITE DE NEUTRALISATION DE L'ANNULEUR D'ECHOS DANS UN CENTRAL DE COMMUTATION TELEPHONIQUE

(84) Designated Contracting States:
**DE FR NL SE**

(30) Priority: **09.02.1993 IT MI930212**

(43) Date of publication of application:
**29.11.1995 Bulletin 1995/48**

(73) Proprietor: **ITALTEL SOCIETA ITALIANA TELECOMUNICAZIONI s.p.a.**
**20149 Milano (IT)**

(72) Inventors:
• **RAVEGLIA, Dalmazio**
  **I-20133 Milano (IT)**
• **SARTORELLO, Paolo**
  **I-35041 Battaglia Terme (IT)**

(74) Representative: **Giustini, Delio**
**c/o Italtel Società Italiana**
**Telecomunicazioni s.p.a.**
**P.O. Box 10**
**20019 Settimo Milanese (MI) (IT)**

(56) References cited:
• **TELCOM REPORT., vol.9, no.6, 1986, MUNCHEN DE pages 352 - 357 KEMMESIES ET AL. 'ECHOKOMPENSATOR IN WELTWEITEN NACHRICHTENVERBINDUNGEN'**
• **PROCEEDINGS OF THE INTERNATIONAL CONFERENCE ON ACOUSTICS, SPEECH AND SIGNAL PROCESSING, vol.4, 7 April 1986, NEW YORK (US) pages 2619 - 2622 MELSA 'A SIMPLE PHASE-REVERSAL TONE DISABLER' cited in the application**

**Description**

Technical Field

The present invention relates generally to a process for the detection of the disabling tone of the echo canceller in a telephone switching exchange. Moreover the invention relates to a device carrying out such process.

In order to eliminate the inconveniences due to the known echo effect, means are foreseen in the telephone exchanges (the so called echo cancellers) suitable to minimize such effects.

Such means are essentially set up by adaptive digital filters which, operating on the vocal signals in a digitized form, make it possible to obtain the original signal free of the echo effect.

However the presence of an echo canceller may cause inconveniences in communications of the non vocal type such as data transmission, telefax links, etc., and in these cases it must be possible to disable the echo canceller .

For this aim, together with the signals to be transmitted (or in the call set-up phase), predetermined signals or tones are transmitted to disable the echo canceller.

The tone in question is made up by a sinusoidal signal with a frequency of 2100 Hz presenting every 450 msec. phase inversions of 180°.

The telephone exchange must therefore be able to recognize such tone and, after the detection is carried out, to disable the echo canceller.

The verification of the presence of this- tone turns out not to be easily realisable especially because of the noise which might be added to the useful signal and of possible variations of the tone characteristics with respect to the above-mentioned values.

In fact the recommendation G164 and G165 of the CCITT foresee a tolerance of:

- ± 21 Hz on the frequency;
- ± 10° on the phase inversion; and,
- ± 25 ms on the periodicity of the phase inversions themselves,

to be acceptable in the transmission of the disabling tone. Moreover a signal present outside the band 1900 - 2350 Hz must be rejected.

Background Art

In the article "a simple phase-reversal tone disabler" by J.L. Melsa and R.J. Ragland, IEEE 1986, ICASSP 86, TOKYO, 48.22.1-48.22.4, pages 2619-2622 an algorithm for the detection of the disabling tone of the echo canceller suitable to operate even in presence of a noise has been proposed.

This method foresees the use of a single filter, and for the compensation of possible frequency shifting of the tone (within the admitted limits) it foresees the presence of a compensation circuit.

The algorithm at the basis of such method needs for its realization a delay unit, an adaptive phase corrector, two low pass filters and a phase discriminator. The implementation of all these functions on a Digital Signal Processor (DSP) turns out to be complex and needs the carrying out of floating point arithmetic calculations badly adaptable to the characteristics of a DSP with current performances and at limited cost, and they make it difficult to realize in real time operating detection systems.

Object of the Invention

The object of the present invention is to supply a process for the detection of the disabling tone for an echo canceller suitable to supply reliable responses even in the presence of heavy disturbances, and even when the tone has a very low signal level.

A further object of the present invention is to supply a process to be easily implemented on a common DSP without necessity to carry out complicated calculations, thus to allow the realization of detection systems in real time.

Disclosure of the Invention

The invention achieves these object through a process for the detection of the disabling tone of the echo canceller in a telephone exchange, said tone being set up by a sinusoidal signal of a constant amplitude with periodical phase reversal of 180°, superimposed to the signal related to a telephone call,
characterized in that it comprises the following steps:

- sampling and digitizing the signal at a frequency fn obtaining a signal consisting a sequence of digital samples x(n);
- filtering said digital signal x(n) to get two between them by 90° phase shifted components;
- subsampling said two components to obtain two further components, of a complex signal, being between them phase shifted by 90°;
- adding the squares of said two further subsampled components to get a representative value of said complex signal;
- estimating the magnitude of the phase shift in correspondence of the change of said representative value of the complex signal using at least three equidistant and subsequent values of said complex signal;
- detecting the phase shift as a periodical inversion of 180° if such shift is included between two preset limit values.

It is also the object of the present invention a device for the detection of the disabling tone of the echo canceller in a telephone exchange, said tone being set up by a sinusoidal signal of constant amplitude with periodical phase inversion of 180°, superimposed to the relating signal of a telephone call, characterized in that it comprises:

- a digital band-pass filter, connected to the input signal x(n), with non attenuated band centred on the frequency of said sinusoid of said disabling tone;
- a Hilbert transformer, connected to the input signal x(n), and having similar filtering characteristics of said band-pass filter but presenting a phase shift of 90° with respect to the output of said band-pass filter;
- two decimators, each one connected to the output of one of said band-pass filters and Hilbert transformer; the output [w1(m), w2(m)] of said decimators being connected to processing means suitable to detect variations of the sum of the square values of said outputs and to determine the magnitude of the phase shift of the received signal.

Further advantageous characteristics are the subject of the depending claims.

Brief Description of the Drawings

The functional characteristics and the advantages of a process according to the present invention will become apparent from the following description taken in conjunction with the preferred embodiment thereof with reference to the accompanying drawings, in which: :

figure 1 shows a block diagram of the device according to the invention, in which the signal processing phases in a process according to the invention are pointed out;
figure 2 shows the mask for the responses in frequency of the BP filter and of the Hilbert transformer HT of figure 1;
figure 3 is a graph showing the trend in time of the module of the output of the block RM of figure 1 in presence of the disabling tone of the echo canceller during a phase shift;
figure 4 is a polar diagram showing the trend in the complex plane of the vector r(m) used according to the invention, in presence of the disabling tone of the echo canceller generating a phase shift φ;
figure 5 is a block diagram pointing out a second embodiment of the process according to the present invention;
figure 6 is a polar diagram for the illustration of a second algorithm for the detection of the phase shift.

Detailed Description of the Preferred Embodiment

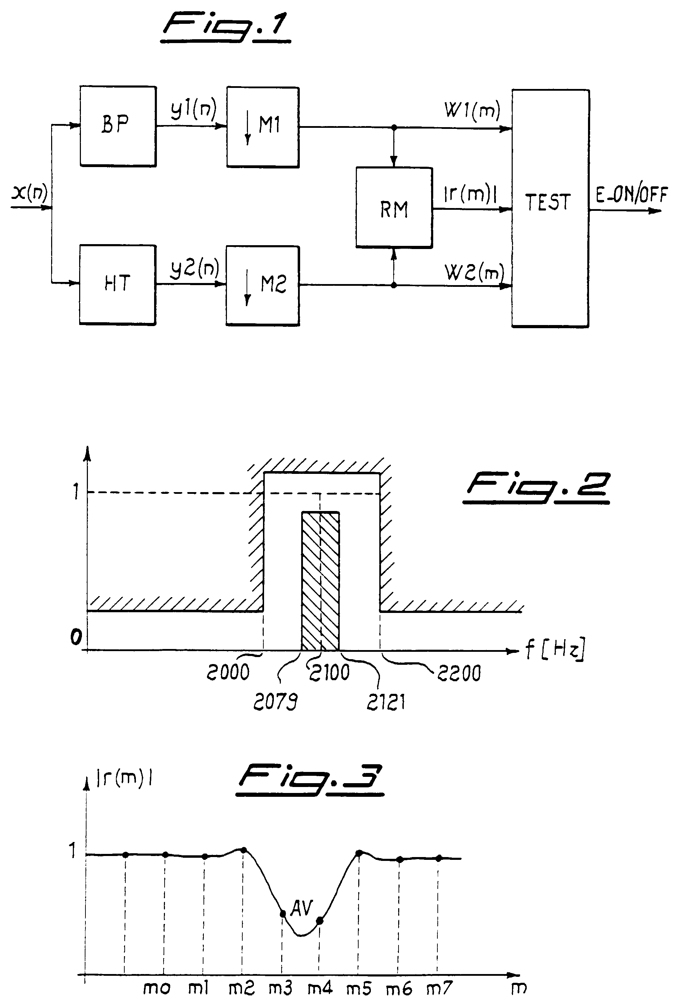

With reference first of all to figure 1, x(n) indicates a digital signal obtained by sampling the signal received with a sampling frequency of 8 kHz and digitizing such samples in the known way.

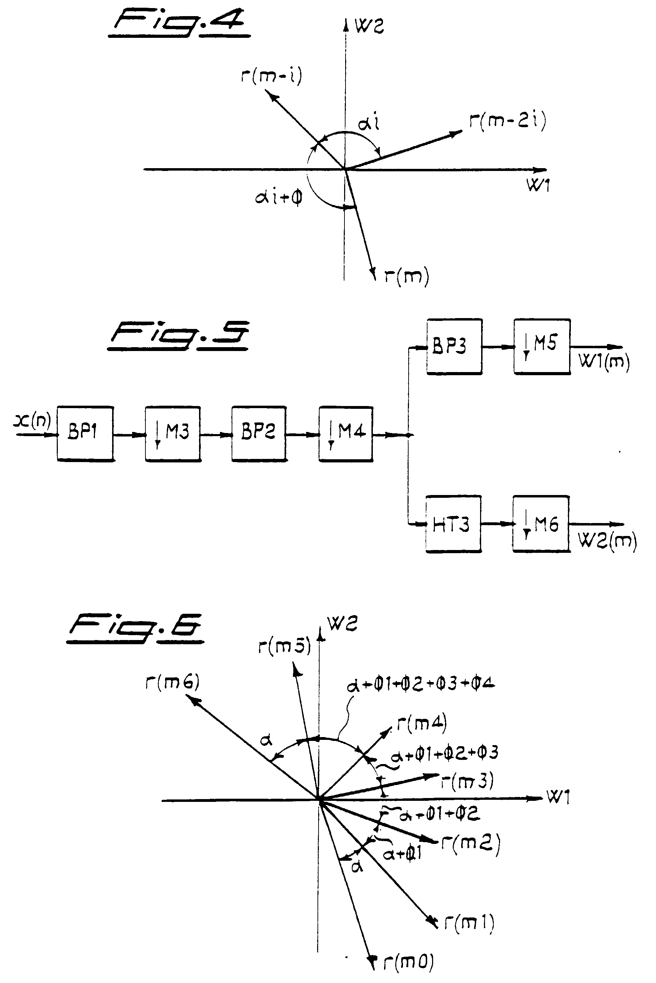

The signal x(n) is simultaneously carried to a digital band-pass filter of the FIR type, indicated by BP, and to a Hilbert transformer associated to it, indicated by HT. The BP filter has the mask schematically shown in figure 2 with band pass between 2000 and 2200 Hz, and therefore narrower than the band in which the signal could be accepted. The Hilbert transformer HT has the same mask for what concerns the module of the frequency response, shown in figure 2, but it presents a phase shift of 90° with respect to the output of the BP filter.

The outputs of the blocks BP and HT, y1(n) and y2(n) are respectively brought to two decimators M1 and M2 which reduce in an equal way, e.g. 20 times, the sampling frequency or they use a sample, indicated by w1(m) and w2(m) respectively, every 20 received samples or (m=n/20).

The outputs of the blocks M1 and M2 are set up by signals w1(m) and w2(m) which are phase shifted by 90° between them, and they supply the input of a block RM calculating the modulus of a vector r(m) having as real and imaginary components the signals w1(m) and w2(m), respectively.

According to an alternative embodiment which adoption is the function of specific realization choices the block RM calculates the square of the modulus of the vector r(m), or

$$Ir(m)I^2 = [w1(m)]^2 + [w2(m)]^2$$

For what has been defined, this vector r(m) turns out having a constant module in function of m in case the signal x(n) contains a sinusoid of constant amplitude and a frequency included in the passband of BP and HT. The signals w1(m), w2(m) and Ir(m)I are therefore carried to a TEST block for the phase calculation as described in a more detailed way hereafter.

The construction illustrated from the conceptual point of view in figure 1 may be simplified by realizing the components BP and HT as filters FIR and by calculating only the outputs w1(m) and w2(m).

As shown in figure 3, the amplitude of the module signal of r(m) is substantially constant in the absence of phase shifts while, in case of phase shifts φ, the envelop of the sample sequence shows a subsidence AV and the variation of the signal (depth of the subsidence) is correlated in a univocal way to the angular value of such shift.

According to the invention the use of a BP filter with a band narrower compared to that foreseen for the disabling signal reduces in a consistent way the noise. In this case however if the tone is not exactly at 2100 Hz even if remaining within the foreseen tolerances, part of the spectrum is eliminated in a non symmetric way, and this would increase the uncertainty on the value of the phase shift if there is a limitation to the estimate of the phase shift being only based on the observation of the transient subsidence.

According to the filter characteristics, in the case of a phase shift the modulus function of r(m) may show a slight increase before suddenly decreasing in order to get back to the initial value with a slight overshot. Such variation may be used to identify with greater security the existence of the phase shift.

The polar diagram of figure 4 explains the modality by which the TEST block carries out the examination of the possible phase shift. This figure shows three vectors, equidistant as indexes, indicated by r(m-2i), r(m-i) and r(m), respectively, where i=1, 2, 3 etc. Therefore in the case i=1 the three vectors are consecutive. In such vectors, in absence of phase shifts, the modulus remains constant while the phase varies in a regular and constant way or with equal phase increment $\alpha i$. In the case of phase shift the phase increment becomes $\alpha i + \phi$ where $\phi$ is the phase shift.

As already said, when an inversion occurs, or more in general when a conspicuous phase shift occurs, the modulus of r(m) undergoes a sharp transient in form of a subsidence. The detection of such transient, associated to a time measure indicating that about 450 msec have passed from the previous transient, is used to activate an algorithm for the measurement of the phase shift in the TEST block examining moreover if the value of the phase shift obtained in this way is included in the predetermined value interval. In the affirmative case the output E_ON/OFF (ECHO_ON/OFF) of the TEST block assumes a positive logic value and a negative one in the contrary case.

Such value interval may be comprised for example between 135° and 225°, and the following description refers in particular to this case as the choice of this interval simplifies the detection operation, presenting such angle a unitary tangent value. Generally however the angular interval may be changed by means of a suitable factor k, as it will be explained hereafter.

A possible algorithm for the measurement of the phase of the signal to be recognized will be illustrated once again with reference to figure 4 wherein the three values of the vector r(m) are shown indicated by r(m-2i), r(m-i) and r(m), respectively.

Such vectors being defined by:

$$r(m-2i) = a1 + j\ a2$$

$$r(m-i) = b1 + j\ b2$$

$$r(m) = c1 + j\ c2.$$

The following magnitudes are calculated:

$$d = a1.b2 - a2.b1$$

$$e = a1.b1 + a2.b2$$

$$f = b1.c2 - b2.c1$$

$$g = b1.c1 + b2.c2$$

and

$$A = f.d + g.e$$

$$B = f.e - g.d$$

It turns out that the tangent of the angular increment $\phi$ due to the phase shift is given by tg $\phi$ = B/A.

The following conditions make it possible to recognize a phase shift $\phi_d$ included in the above-mentioned angular interval being the interval normally foreseen for the disabling. Such conditions can easily be realized by a DSP.

| | | |
|---|---|---|
| A<0 B<0 | III quadrant | if IAI > IBI |
| A<0 B>0 | II quadrant if | IAI > IBI |

The conditions A>0 and B>0 identify the I quadrant and the conditions A>0 and B<0 identify the IV quadrant, and both lead the rejection of the presumed phase inversion. In the case the acceptation interval has to be extended or reduced it is sufficient to introduce a suitable factor k in the relations and in the above-mentioned calculations.

Virtually it has been found out that there is a good discrimination with i = 2 or 3.

Another possible usable algorithm according to the invention consists in the calculation of the subsequent partial phase shifts $\phi_k$ and their integration in order to obtain the total phase shift $\phi_{tot}$. This algorithm at the moment turns out to be preferred and is illustrated with reference to the polar diagram of figure 6 representing a phase shift located between the vectors r($m_1$) and r($m_5$).

It is supposed that the phase shifts are in all N with the first phase shift at the beginning of the transient being identified by the index k=1 and the last one at the end of the transient identified by k=N. In general between the indexes $m_k$ there is the relation: $m_{k+1}=m_k+i$. In these conditions each phase shift is characterized by the pair $A_k$, $B_k$ and has the value of the relation:

$$tg(\phi_k) = B_k/A_k \quad k=1, 2, ..., N$$

Then the total phase shift turns out to be:

$$\phi_{tot} = \phi_N + 2\phi_{N-1} + 3\phi_{N-2} + ... + N\phi_1$$

Indicating by $\phi_k$ the phase increment r(m) undergoes passing from $m_k$ to $m_{k+1}$ with respect to the phase increment it undergoes passing from $m_{k-1}$ to $m_k$, it is easy to demonstrate that a total phase shift occurring through N relative phase increments $\phi_k$ is equal to:

$$\sum_{k=1}^{N} \phi_k \cdot (N+1-k)$$

On the basis of the above-mentioned relations we get:

$$A_{tot} + jB_{tot} = (A_N + jB_N) \cdot (A_{N-1} + jB_{N-1})^2 \cdot .. (A_1 + jB_1)^N$$

from where:

$$tg(\phi_{tot}) = B_{tot}/A_{tot}$$

This algorithm presents the advantage that there is no need of arcotg calculations of the angular increment but only of elementary operations such as sums, products and accumulation suitable for the realization on microprocessor for DSP. In particular it has been found out that the algorithm operates well putting i=2 and N=2 so that the summation is practically reduced to only two terms.

In alternative putting i=3 and N=2 and approximating the calculation of the product by:

$$A_{tot} + jB_{tot} = (A_2 + jB_2) \cdot (A_1 + jB_1)$$

there is a further reduction of the number of calculations as it is avoided to carry out the square of the second term.

Figure 5 shows another block diagram conceptually analogous to the diagram of figure 1 showing a different way of proceeding to get the signals w1(m) and w2(m) from the input signal x(n).

The signal x(n) enters a first filter BP1 which output is subsampled 5 times in the block M3, and the output of this last block enters a second filter BP2 which output is further subsampled 2 times in the block M4.

The output of the block M4 enters simultaneously a third filter BP3 and in its corresponding Hilbert transformer HT3, carrying out a phase shift of 90°.

The signals on the outputs of BP3 and HT3 after a further decimation by 2, in the blocks M5 and M6, respectively, correspond substantially to the signals w1(m) and w2(m) of figure 3 and they are indicated by the same references.

Such a multi-stage structure has the advantage of the reduction of the complexity of calculations.

The values of the angles $\phi_k$ and consequently of the phase shift, are obtained by simple calculations starting from the values of the vector r(m) projections on the real and imaginary axes.

The process according to the invention in order to get the phase shift value presents the considerable advantage of being independent from the value of the angle $\alpha i$ (phase difference in absence of shifts) which depends on the frequency of the sinusoidal signal and on the sampling time.

In fact, as the frequency of the disabling signal does not have a constant value for all calls but it may vary within a value band (2100 ± 21 Hz) it would not be possible to easily obtain directly from the signal x(n) correct estimates of the phase increment.

Instead thanks to the fact that the frequency of the disabling signal may be considered with optimum constant approximation for the total transient duration, the estimate of the phase shift starting from the so defined values $\phi_k$ turns out to be independent from such frequency.

The insensibility of such process to a noise present on the input signal x(n) is very high for the filtering operation of BP and HT: an additive noise on x(n) causes only slight variations on the value of r(m).

According to the process of the invention the blocks RM and TEST may be usefully realized so that it is not necessary to calculate the phase of the vector r(m) to decide the detection of the phase shift.

In fact it is sufficient that the block TEST imposes the detection conditions of the phase shift not on the angle values $\phi_k$, but on the values derived from the vector components $r(m_k)$ (with k varying from 0 to N) through elementary operations on the real and imaginary axes.

In this way it turns out that it is not necessary to carry out any calculation of inverse trigonometric functions (typically arc tangent) in order to calculate the value of the phase shift.

This characteristic turns out to be very advantageous as the carrying out of trigonometric function calculations on a common DSP results to be extremely onerous from the point of view of the processing time.

**Claims**

1. Process for the detection of the disabling tone of the echo canceller in a telephone exchange, said tone being set up by a sinusoidal signal of constant amplitude with periodical phase inversions of 180°, superimposed on the related signal of a telephone call,

characterized in that it includes the following steps:

- sampling and digitizing of the signal received at a frequency fn obtaining a signal consisting of a sequence of digital samples x(n);
- filtering said digital signal x(n) in order to get two components [y1(n), y2 (n)] phase shifted between them by 90°;
- subsampling said two components [y1(n), y2 (n)] thus to get two further components [w1(m), w2(m)] of a complex signal r(m), phase shifted between them by 90°;
- adding the squares of said two further subsampled components [w1(m), w2(m)] in order to get a representative value of said complex signal r(m);
- estimating the magnitude of the phase shift connected with the change of said representative value of the complex signal r(m) using at least three equidistant and subsequent phase values of the vector representing the signal r(m);
- detecting the phase shift as a periodical inversion of 180° if said shift is included within two predetermined limit values.

2. Process as claimed in Claim 1, characterized in that said representative value of the complex signal [r(m)] is set up by the modulus of the same signal Ir(m)I.

3. Process as claimed in Claim 1, characterized in that said representative value of the complex signal (r(m)) is set up by the square of the modulus of the same signal Ir(m)I$^2$.

4. Process as claimed in Claim 1, characterized in that said predetermined subsampling relation is 20:1.

5. Process as claimed in Claims 1 to 4, characterized in that the values related to three subsequent vectors r(m) are used for the estimate of the phase shift magnitude.

6. Process as claimed in Claim 1, characterized in that said two predetermined limits are 135° and 225°, respectively.

7. Process as claimed in Claim 1, characterized in that the sum of the phase increments is used for the estimate of the phase shift magnitude:

$$\phi_{tot} = \phi_N + 2\phi_{N-1} + 3\phi_{N-2} + ... + N\phi_1$$

between subsequent N+1 vectors r(m).

8. Process as claimed in Claim 7, characterized in that the magnitude of the phase shift is calculated as:

$$tg(\phi_{tot}) = B_{tot}/A_{tot}$$

where $A_{tot} + jB_{tot} = (A_N + jB_N) \cdot (A_{N-1} + jB_{N-1})^2 \cdot ... (A_1 + jB_1)^N$ and each pair of components $A_k$, $B_k$ is defined by the vectors $r(m_k)$, $r(m_{k-1})$, $r(m_{k+1})$.

9. Process as claimed in Claim 8, characterized in that:

$$A_{tot} + jB_{tot} = (A_2 + j_{B2}) \cdot (A_1 + j_{B1}).$$

10. Process as claimed in Claim 8, characterized in that N=2.

11. Device for the detection of the disabling tone of the echo canceller in a telephone exchange, said tone being set up by a sinusoidal signal of constant amplitude with periodical phase inversion of 180°, superimposed on the related signal of a telephone call, characterized in that it includes:

- a digital band-pass filter (BP), connected to the input signal x(n), with a non attenuated band centred on the frequency of said sinusoid of said disabling tone;
- a Hilbert transformer (HT), connected to the input signal x(n), and having similar filtering characteristics of said band-pass filter (BP) but presenting a phase shift of 90° with respect to the output of said band pass-filter (BP);
- two decimators (M1, M2), each one connected to the output of one of said band-pass filters and said Hilbert transformer; the outputs [w1(m), w2(m)] of said decimators being connected to processing means (RM, TEST) suitable to detect variations of the sum of square vectors of said outputs and to determine the magnitude of the phase shift of the received signal.

12. Device as claimed in Claim 11, characterized in that it comprises, upstream of said digital band-pass filter (BP3) and of Hilbert transformer (HT3), digital filters (BP1, BP2) connected in series between them and separated by decimators (M3 and M4).

**Patentansprüche**

1. Verfahren zum Detektieren eines Disable-Tons eines Echokompensators in einer Fernsprechvermittlungsanlage, wobei der genannte Ton aus einem Sinussignal mit konstanter Amplitude mit periodischen Phaseninversion von 180° besteht und das entsprechende Telephonrufsignal überlagert, da durch gekennzeichnet, daß es die folgenden Stufen einschließt:

- Abtasten und Digitalisieren des mit einer Frequenz fn empfangenen Signals, wobei man ein Signal erhält, das aus einer Sequenz digitaler Muster x(n) besteht;
- Filtern des genannten digitalen Signals x(n), um so zwei Komponenten [y1(n), y2(n)] zu erhalten, die unter einander um 90° phasenverschoben sind;
- Unterbemusterung der beiden genannten Komponenten [y1(n), y2(n)], um so zwei weitere Komponenten [w1(m), w2 (m)] eines zusammengesetzten Signals r(m) zu erhalten, wobei diese beiden letzteren Komponenten untereinander um 90° phasenverschoben sind;
- Addieren der Quadrate der beiden genannten unterbemusterten Komponenten [w1(m, w2 (m)], um so einen repräsentativen Wert des genannten zusammengesetzten Signals r(m) zu erhalten;
- Bewertung der Größe der Phasenverschiebung verbunden mit der Umwandlung des genannten repräsentativen Wertes des zusammengesetzten Signals r(m) unter Benutzung von mindestens drei abstandsgetreuen und aufeinander folgenden Phasenwerten des das Signal r(m) darstellenden Vektors;
- Detektieren der Phasenverschiebung als eine periodische Inversion von 180°, falls sich die genannte Verschiebung zwischen zwei vorher bestimmten Grenzwerten befindet.

2. Verfahren nach Anspruch 1, dadurch gekennzeichnet, daß der genannte Repräsentativwert des zusammengesetzten Signals [r(m)] aus dem Modul des selben Signals Ir(m)I besteht.

3. Verfahren entsprechend Anspruch 1, da durch gekennzeichnet, daß der genannte Repräsentativwert des zusammengesetzten Signals (r(m)) aus dem Quadrat des Moduls des selben Signals Ir(m)I² besteht.

4. Verfahren entsprechend Anspruch 1, da durch gekennzeichnet, daß das vorbestimmte Verhältnis der Unterbemusterung 20:1 ist.

5. Verfahren entsprechen den Ansprüchen von 1 bis 4, dadurch gekennzeichnet, daß die sich auf drei aufeinander folgenden Vektoren r(m) beziehenden Werte benutzt werden, um die Größenordnung der Phasenverschiebung zu bewerten.

6. Verfahren entsprechend Anspruch 1, dadurch gekennzeichnet, daß die genannten beiden vorherbestimmten Grenzwerte 135° beziehungsweise 225° sind.

7. Verfahren entsprechend Anspruch 1, dadurch gekennzeichnet, daß die Summe der Phasenanstiege zur Bewertung der Größenordnung der Phasenverschiebung benutzt wird:

$$\phi_{tot} = \phi_N + 2\phi_{N-1} + 3\phi_{N-2} + ... + N\phi_1$$

zwischen aufeinander folgenden N+1 Vektoren r(m).

8. Verfahren entsprechend Anspruch 7, dadurch gekennzeichnet, daß die Größenordnung der Phasenverschiebung berechnet wird wie:

$$tg(\phi_{tot}) = B_{tot}/A_{tot}$$

wobei $A_{tot} + jB_{tot} = (A_N + jB_N) (A_{N-1} + jB_{N-1})^{2} \cdot ... (A_1 + jB_1)^N$ und jedes Komponentenpaar $A_K$, $B_K$ durch die Vektoren $r(m_k)$, $r(m_{k-1})$, $r(m_{k+1})$ bestimmt wird.

9. Verfahren entsprechend Anspruch 8, dadurch gekennzeichnet, daß:

$$A_{tot} + jB_{tot} = (A_2 + j_{B2}) \cdot (A_1 + j_{B1}).$$

10. Verfahren entsprechend Anspruch 9, dadurch gekennzeichnet, daß N=2.

11. Einrichtung zum Detektieren des Disable-Tons eines Echokompensators in einer Fernsprechvermittlungsanlage, wobei der genannte Ton aus einem Sinussignal mit konstanter Amplitude mit periodischer Phaseninversion von 180° besteht und das entsprechende Telephonrufsignal überlagert, dadurch gekennzeichnet, daß es folgendes einschließt:

- einen digitalen Bandpaßfilter (BP) verbunden mit dem Eingangssignal x(n) mit einem nicht gedämpften Band , das auf der Frequenz der genannten Sinuskurve des genannten Disable-Tons zentriert ist;
- einen Hilbert-Transformator (HT) verbunden mit dem Eingangssignal x(n) und mit gleichartigen Filtermerkmalen wie die des genannten Bandpaßfilters (BP), aber mit einer Phasenverschiebung von 90° verglichen mit dem Eingang des genannten Bandpaßfilters (BP);
- zwei Dezimierern (M1, M2), wobei jeder mit dem Ausgang eines der genannten Bandpaßfiltern und des genannten Hilbert-Transformators verbunden ist; die Ausgänge [w1(m), w2(m)] der genannten Dezimierer sind verbunden mit den Verarbeitungsmitteln (RM, TEST), die geeignet sind Variationen der Summe von Quadratvektoren der genannten Ausgänge festzustellen und die Größenordnung der Phasenverschiebung des empfangenen Signals zu bestimmen.

12. Vorrichtung entsprechend Anspruch 11, dadurch gekennzeichnet, daß sie oberhalb des genannten digitalen Bandpaßfilters (BP3) und des Hilbert-Transformators (HT3) digitale Filter (BP1, BP2) einschließt, die untereinander in Serie verbunden und durch Dezimierer (M3 und M4) getrennt sind.

**Revendications**

1. Procédé de détection d'une tonalité de neutralisation de l'annuleur dans un central de commutation téléphonique, la dite tonalité étant formée par un signal sinusoïdal d'amplitude constante avec des inversions périodiques de phase de 180°, superposée au signal relatif d'un appel téléphonique, caractérisé en ce qu'il comprend les pas suivants:

     échantillonnage et digitalisation du signal reçu à une fréquence fn obtenant un signal, qui consiste en une séquence d'échantillons digitaux x(n);
     filtrage du dit signal digital x(n) pour obtenir deux éléments [y1(n), y2(n)] déphasés entr'eux de 90°;

-      subéchantillonnage des deux dits éléments [y1(n), y2(n)] pour obtenir deux autres éléments [w1(m), w2(m)] d'un signal complexe (r(m)) déphasés entr'eux de 90°;
-      addition des carrés des deux autres éléments subéchantllonnés [w1(m), w2(m)] pour obtenir une valeur représentative du dit signal complexe (r(m));
-      évaluation de l'entité du décalage de phase en correspondance du changement de la dite valeur représentative du signal complexe r(m) en utilisant au moins trois valeurs de phase à égale distance et successives du vecteur r(m) représentant le signal;
-      détection du décalage de phase comme une inversion périodique de 180°, si le dit décalage est compris entre deux valeurs de limite prédéterminées.

2. Procédé selon la revendication 1, caractérisé en ce que la dite valeur représentative du signal complexe [r(m)] est constituée par le module du signal |r(m)| même.

3. Procédé selon la revendication 1, caractérisé en ce que la dite valeur représentative du signal complexe (r(m)) est constituée par le carré du module du signal |r(m)| même.

4. Procédé selon la revendication 1, caractérisé en ce que le dit rapport prédéterminé de subéchantillonnage est de 20:1.

5. Procédé selon les revendication de 1 à 4, caractérisé en ce que les valeurs relatives aux trois vecteurs r(m) successifs sont utilisées pour évaluer l'entité du décalage de phase.

6. Procédé selon la revendication 1, caractérisé en ce que les deux dites limites préétablies sont respectivement 135° et 225°.

7. Procédé selon la revendication 1, caractérisé en ce que la somme des incréments de phase est utilisée pour l'évaluation de l'entité du décalage de phase:

$$\phi_{tot}=\phi_N + 2\phi_{N-1} + 3\phi_{N-2} + ... + N\phi_1$$

entre N+1 vecteurs r(m) successifs.

8. Procédé selon la revendication 7, caractérisé en ce que l'entité du décalage de phase est calculée comme:

$$tg(Y_{tot}) = B_{tot}/A_{tot}$$

où $A_{tot} + jB_{tot} = (A_N + jB_N) \cdot (A_{N-1} + jB_{N-1})^2 \cdot ... (A_1 + jB_1)^N$ et chaque pair d'éléments $A_k$, $B_k$ est définie par les vecteurs $r(m_k)$, $r(m_{k-1})$, $r(m_{k+1})$.

9. Procédé selon la revendication 8, caractérisé en ce que:

$$A_{tot} + jB_{tot} = (A_2 + j_{B2}) \cdot (A_1 + j_{B1}).$$

10. Procédé selon la revendication 8, caractérisé en ce que N=2.

11. Dispositif pour la détection d'une tonalité de neutralisation de l'annuleur d'échos dans un central de commutation téléphonique. la dite tonalité étant constituée par un signal sinusoïdal d'amplitude constante avec des inversions de phase périodiques de 180°, caractérisé en ce qu'il comprend:

-      un filtre digital passe-bande (BP) relié au signal d'entrée x(n) avec une bande non atténuée centrée sur la fréquence de la dite sinusoïde de la dite tonalité de neutralisation;

- un transformateur de Hilbert (HT) relié au signal d'entrée x(n) et ayant des caractéristiques de filtrage analogues à celles du dit filtre passe-bande (BP);
- deux décimateurs (M1, M2), chacun relié à la sortie d'un des dits filtres passe-bande et dit transformateur Hilbert; les sorties [w1(m), w2(m)] des dits décimateurs étant reliées à des moyens d'élaboration (RM, TEST) apte à détecter des variations de la somme des vecteurs carrés des dites sorties et pour déterminer l'entité du décalage de phase du signal reçu.

12. Dispositif selon la revendication 11, caractérisé. en ce qu'il comprend en amont du dit filtre digital passe-bande (BP3) et du transformateur de Hilbert (HT3) des filtres digitaux (BP1, BP2) reliés en série entr'eux et séparés par des décimateurs(M3 et M4).

*Fig.1*

BP — y1(n) → ↓ M1 — W1(m) →

x(n) →

HT — y2(n) → ↓ M2 — W2(m) →

RM — |r(m)| →

TEST — E-ON/OFF →

*Fig.2*

*Fig.3*

2000   2079   2100   2121   2200   f [Hz]

|r(m)|

AV

m0  m1  m2  m3  m4  m5  m6  m7   m

# Fig.4

# Fig.5

# Fig.6